# EUROPÄISCHE PATENTSCHRIFT

(11) **EP 1 719 648 B1**
(45) Veröffentlichungstag und Bekanntmachung des Hinweises auf die Patenterteilung: **18.06.2008**
(21) Anmeldenummer: 06008348.2
(22) Anmeldetag: 21.04.2006
(51) Int. Cl.: B60H 1/00

(54) **Anordnung zur Befestigung und Abdichtung eines Expansionsventils einer Klimaanlage für Kraftfahrzeuge**
Assembly for securing and sealing a vehicle air condigioning expansion valve
Dispositif de fixation et d'étanchéité d'une valve de détente de climatisation automobile

(30) Priorität: 04.05.2005 DE 102005021398
(43) Veröffentlichungstag der Anmeldung: 08.11.2006
(73) Patentinhaber: Behr GmbH & Co. KG, 70469 Stuttgart (DE)
(72) Erfinder: Bosquet, Stéphane, 70195 Stuttgart (DE); Goce, Richard, Dipl.-Ing., 70327 Stuttgart (DE); Sickelmann, Michael, Dipl.-Ing., 70806 Kornwestheim (DE)

(56) Entgegenhaltungen:
- EP-A- 1 555 146
- WO-A-01/74615
- FR-A- 2 834 672
- PATENT ABSTRACTS OF JAPAN Bd. 007, Nr. 203 (M-241), 8. September 1983 (1983-09-08) & JP 58 101818 A (HITACHI SEISAKUSHO KK), 17. Juni 1983 (1983-06-17)

## Beschreibung

Die Erfindung betrifft ein Klimaanlagengehäuse für eine Kraftfahrzeugklimaanlage nach dem Oberbegriff des Anspruchs 1. Weiterhin betrifft die Erfindung eine Klimaanlage nach dem Oberbegriff des Anspruchs 10.

Im Kältemittelkreislauf einer Krafttahrceugklimaanlage sind als Komponenten u. a. ein Verdampfer und ein Expansionsventil vorgesehen, welche vielfach als Baueinheit ausgeführt oder in unmittelbarer Nähe zueinander angeordnet sind. Der Verdampfer, durch welchen Luft zur Klimatisierung des Fahrzeuginnenraumes abgekühlt wird, befindet sich in einem Gehäuse der Klimaanlage, welche an einer Stirn- oder Spritzwand, die den Fahrzeuginnenraum vom Motorraum abteilt, befestigt ist. Bei herkömmlichen Klimaanlagen, welche mit einem konventionellen Kältemittel wie R134a betrieben werden, ist das Expansionsventil im Bereich der Spritzwand und auf der Seite des Motorraumes angeordnet und gegenüber dem Fahrzeuginnenraum durch eine Schmutz- oder Staubdichtung abgedichtet. Eine derartige Anordnung eines Expansionsventils ist beispielsweise in der EP 0 762 063 B1 offenbart. Der Verdampfer der Klimaanlage ist über Kältemittelleitungsabschnitte mit dem Expansionsventil verbunden, wobei die Enden der Leitungsabschnitte mittels geeigneter Dichtungen, z. B. O-Ringen im Gehäuse des Expansionsventils abgedichtet und mittels eines Flansches befestigt sind. In ähnlicher Weise werden die Kälternittelanschlüsse auf der Seite des Motorraumes am Expansionsventil befestigt - das Expansionsventil bildet somit eine Schnittstelle im Kältemittelkreislauf.

In der gattungsgemäße FR 2 834 672 A1 ist ein Expansionsventil offenbart, welches im Bereich der Spritzwand des Fahrzeuges angeordnet, durch ein Dichtmodul gehalten und gegenüber der Spritzwand abgedichtet ist. Eine ähnliche Anordnung und Abdichtung eines Expansionsventils ist in der WO 01/74615 A1 dargestellt, wobei das Dichtelement als Formdichtung ausgebildet ist, welche einerseits das Expansionsventil umschließt und andererseits an der Spritzwand bzw. dem Verdampfergehäuse befestigt ist. Durch die JP 2000203251 A wurde ein Expansionsventil bekannt, welches von einem Verkleidungskörper umschlossen und in einer Vertiefung der Spritzwand aufgenommen ist, wobei die Kältemittelleitungen sowohl auf der Fahrzeuginnenraum- als auch auf der Motorraumseite durch verschraubbare Flansche am Expansionsventil befestigt sind.

Bei der Montage der Kältemittelanschlüsse, insbesondere auf der Motorraumseite treten infolge der Verschraubung der Flansche Drehmomente (Anzugsmomente) auf, welche abgestützt werden müssen. In der älteren europäischen Patentanmeldung mit dem amtlichen Aktenzeichen 04000523.3 wurde daher vorgeschlagen, einen Befestigungsflansch, ein so genanntes Leitungs-Positionierungs-Element, am Gehäuse abzustützen und verdrehfest zu fixieren, beispielsweise über ein Verschrauben an zwei am Gehäuse angeordneten Zapfen oder dergleichen. Damit wird der Vorteil erreicht, dass das Anzugsmoment bei der Montage der motorraumseitigen Kältemittelanschlussleitungen am Gehäuse der Klimaanlage abgestützt wird und die Verdampferrohre nicht belastet werden.

Bei Klimaanlagen mit einem alternativen Kältemittel wie CO₂ bzw. R744 ergeben sich aufgrund der höheren Kältemitteldrücke in den Kältemittelleitungen Probleme, welche mit den bekannten Anordnungen nicht mehr lösbar sind. Einerseits treten bei der Montage der Kältemittelanschlüsse am Expansionsventil höhere Anzugsmomente auf, welche durch geeignete Mittel abgestützt werden müssen, um eine bleibende Verformung oder Beschädigung der Komponenten zu vermeiden. Andererseits besteht die Forderung, dass austretendes Kältemittel (CO₂) nicht in übermäßigen Mengen in den Fahrgastraum gelangen darf, da dies eine Gefährdung der Fahrzeuginsassen zur Folge hätte. Die bekannten Dichtungsanordnungen sind lediglich als Staub- oder Schmutzdichtungen konzipiert und daher nicht für eine gasdichte Abdichtung geeignet.

Ausgehend von dem vorgenannten Stand der Technik, liegt die Aufgabe der Erfindung darin, ein Klimaanlagengehäuse bzw. eine Klimaanlage der eingangs genannten Art dahingehend zu verbessern, dass eine sichere und kostengünstige Abstützung der einzelnen Komponenten, insbesondere bei der Montage und beim Einbau der Klimaanlage in das Kraftfahrzeug ermöglicht wird. Außerdem soll in Fortbildung der Erfindung eine Abdichtung des Fahrzeuginnenraumes gegen austretendes Kältemittel, insbesondere CO2 erreicht werden.

Diese Aufgabe wird durch die Merkmale des Patentanspruches 1 gelöst. Vorteilhafte Ausgestaltungen ergeben sich aus den Unteransprüchen.

Dabei wird vorgeschlagen, ein Klimaanlagengehäuse (1) für eine Kraftfahrzeugklimaanlage mit wenigstens einem Aufnahmeraum für zumindest ein flanschartiges Verbindungsmittel von kältemittelführenden Bauteilen und wenigstens einer Abstützvorrichtung für zumindest ein ftanschartiges Verbindungsmittel zur Aufnahme von Kräften derart auszubilden, dass zumindest eine Abstützvorrichtung rahmenartig ausgebildet ist, und dass die Abstützvorrichtung über Stegartige Haltemittel am Klimaanlagengehäuse angeordnet ist. In diesem Zusammenhang ist insbesondere an Verbindungsflansche von Kältemittelleitungen, Blockverschraubungen von Kältemittelleitungen, Expansionsorgane für Kältemittel (insbesondere wenn diese als Baueinheit mit anderen Bauteilen, wie insbesondere dem Verdampfer ausgebildet sind) zu denken. Mit Hilfe der vorgeschlagenen Abstützvorrichtung ist es möglich, dass die beispielsweise im Falle von CO₂ (R744) als Kältemittel erhöhten erforderlichen Anzugsdrehmomente beim Anschluss von Kältemittelleitungen und die dabei auf die Kältemittelleitungen übertragenen Kräfte von den Abstützvorrichtungen zumindest teilweise aufgenommen und an das Gehäuse abgeleitet werden können. Ein Verbiegen von Kältemittelleitungen bei der Montage kann dadurch vermieden werden. Dank der rahmenartigen Ausbildung der Abstützvorrichtungen können darüber hinaus auch zusätzliche Montageschritte vermieden werden. So können die von den rahmenartigen Abstützvorrichtungen aufgenommenen flanschartigen Verbindungsmittel beispielsweise durch einfaches Einschieben und ohne weitere Montageschritte wie festschrauben usw. eingebracht werden. Dank der rahmenartigen Ausbildung der Abstützvorrichtungen ist es darüberhinaus möglich, dass einerseits eine Abstützung in zwei Dimensionen erfolgt, andererseits aber ein Verschieben in die dritte Dimension weiterhin möglich bleibt, so dass beispielsweise Vibrationen gedämpft werden können, bzw. ein Ausgleich von durch Temperaturänderungen verursachten mechanischen Spannungen möglich bleibt. Dessen ungeachtet ist es selbstverständlich weiterhin möglich, beispielsweise durch ein- oder beidseitig längs der Kanten der rahmenartigen Abstützvorrichtung angebrachter Ausnasungen oder stegartige Vorsprünge auch eine Abstützung in der dritten Dimension zu ermöglichen. Insbesondere ist es auch denkbar die Ausnasungen derart zu gestalten, dass ein clipsartiges Verrasten der eingebrachten flanschartigen Verbindungsmittel möglich ist. Es sollte angemerkt werden, dass die Erfindung selbstverständlich auch bei konventionellen Heizanlagen, bzw. auch bei Wärmepumpenanlagen oder auch kombinierten Wärmepumpen-/Klimaanlagen von Vorteil ist.

Dadurch, dass die Abstützvorrichtung über stegartige Haltemittel am Klimaanlagengehäuse angeordnet ist, können der Materialeinsatz - und damit die entsprechend einhergehenden Kosten und Gewichte - weitgehend minimiert werden. Darüber hinaus kann auch der Durchtritt von Luft bzw. von Gasen sichergestellt werden. Möglich sind insbesondere Stege in zwei, drei, vier, fünf, sechs, sieben oder acht Richtungen für jeweils eine Abstützvorrichtung, was entsprechende Stabilitätsvorteile bringt. Auch an einzelne Abstützvorrichtungen untereinander verbindende Stege ist zu denken.

Wenn wenigstens eine Abstützvorrichtung als separates, in das Klimaanlagengehäuse einsetzbares Teil ausgebildet ist, ist es insbesondere möglich, das gleiche Klimaanlagengehäuse mit unterschiedlichen Innenausbauten zu versehen. Insbesondere ist es möglich, das gleiche Klimaanlagengehäuse für herkömmliche, beispielsweise mit R134a betriebene, als auch für Klimaanlagen mit CO₂ als Kältemittel zu verwenden. Dies kann zu einer Kostensenkung führen, da größere Stückzahlen realisierbar sind bzw. bspw. auch leicht auf modell- oder länderspezifische Vorgaben eingegangen werden kann.

Weiterhin kann vorgesehen werden, dass bei dem Klimaanlagengehäuse der Aufnahmeraum für das flanschartige Verbindungsmittel durch erste Dichtmittel von atemluftführenden Bereichen des Klimaanlagengehäuses abgedichtet ist. Dadurch kann erreicht werden, dass ein Teil oder auch sämtliche Kältemittelverbindungsstellen in einem nach außen gerichteten Bereich liegen und etwaiges austretendes Kältemittel nicht in den Fahrzeuginnenraum strömt. Der Fahrgastraum bzw. die Fahrzeuginsassen können damit gegen einen Kältemittelaustritt geschützt werden, was insbesondere bei CO₂ von erhöhter Bedeutung ist. Diese - und auch die folgende - Dichtanordnung ist im Übrigen auch jeweils alleine und in Kombination auch ohne eine Abstützvorrichtung sinnvoll verwendbar.

Möglich ist es, dass das Klimaanlagengehäuse einen Anbaubereich zur Verbindung mit einem dazu korrespondierenden Befestigungsbereich wie insbesondere einer Spritzwand eines Kraftfahrzeugs aufweist, der über zweite Dichtmittel gegenüber dem Befestigungsbereich abdichtbar ist. Dieses zweite Dichtmittel (diese zweiten Dichtmittel) kann (können) beispielsweise als Gummimanschette ausgeführt sein. Letztere kann vorteilhafterweise durch einen Stützring auf der Außenseite (Motorraumseite) verstärkt werden. Vorteilhaft hierbei ist, dass die Dichtmanschette ein gewisses Spiel zwischen Gehäuseflansch und Spritzwand zulassen kann und somit einen Toleranzausgleich ermöglichen kann.

Ein flanschartiges Verbindungsmittel, wie beispielsweise ein Kältemittelleitungsverbindungsflansch oder ein Expansionsventil kann durch Kältemittelleitungsabschnitte mit dem Verdampfer verbunden und vorzugsweise als vormontierte Baueinheit ausgebildet sein. Dabei können die Kältemittelleitungsabschnitte durch ein Einsatzstück geführt und abgedichtet werden, welches vorteilhafterweise als mit einer oder mehreren Durchtrittsöffnungen verversehene(r) Dichtring und/oder Dichtbrille aus einem elastomeren Werkstoff herstellbar ist und die Kältemittelleitungen dicht umschließt. Damit wird der Vorteil erreicht, dass beispielsweise das Expansionsventil mit seinen Anschlussstellen, die mögliche Leckagestellen für das Kältemittel darstellen, vom Fahrzeuginnenraum hermetisch abgeschlossen sind.

In weiterer vorteilhafter Ausgestaltung der Erfindung können die ersten und/oder zweiten Dichtmittel, wie insbesondere ein Dichtring oder eine Dichtbrille, und/oder das Klimaanlagengehäuse in einer Trennebene geteilt sein, so dass beispielsweise eine vorgefertigte Baueinheit, bestehend aus Verdampfer und Expansionsventil, in das Gehäuse und den Gehäuseanschlussflansch eingesetzt und durch Zusammenklappen sowie Aufeinanderpressen beider Hälften der Dichtmittel abgedichtet werden kann. Vorteilhaft bei dieser Abdichtanordnung ist ferner, dass eine etwaige, an einem Expansionsventil vorgesehene Niederdruckberststelle zum Motorraum hin öffnen kann und somit der Fahrgastinnenraum gegen austretendes Kältemittel aus der Berststelle geschützt werden kann. Bei einer entsprechenden Ausführung können die Einbauteile einer Klimaanlage leicht in das Gehäuse eingebracht werden, und dieses anschließend - beispielsweise durch Verschrauben oder verclipsen - Vorteilhafterweise reversibel geschlossen werden.

Eine Klimaanlage, welche ein Klimaanlagengehäuse der oben beschriebenen Art aufweist, weist die entsprechenden Vorteile in analoger Weise auf.

Vorteilhaft ist es, wenn bei der Klimaanlage Verdampfer und Expansionsorgan als vormontierte Bauteile ausgebildet sind, weil dadurch die Anzahl der Montageschritte reduziert werden kann und auch die Anzahl von Verbindungsstellen von Kältemittel führenden Bauteilen - die jeweils ein Risiko eines Kältemittelaustritts in sich bergen - verringert werden kann.

Auch wenn Expansionsorgan und Verdampfer als kompakte Baueinheit ausgeführt werden kannn, so sind Expansionsorgan und Verdampfer vorteillhafterweise über Kältemittelleitungen miteinander verbunden. Dadurch kann eine besonders gute und einfache Abschottung von atemluftführenden Bereichen und potentiellen Leckstellen des Kältemittelkreislaufes ermöglicht werden.

Vorteilhafte Ausgestaltungen der Erfindung sind in der Zeichnung dargestellt und werden im Folgenden näher beschrieben. Es zeigen
- Fig. 1: eine mögliche Anordnung eines Expansionsventils innerhalb eines Gehäuseanschlussflansches,
- Fig. 2: eine Dichtbrille zur Abdichtung von Kältemittelrohren,
- Fig. 2a: eine Seitenansicht der Dichtbrille gemäß Fig. 2,
- Fig. 3: einen Ausschnitt des Gehäuseanschlussflansches mit einer Abdichtung gegenüber einer Spritzwand,
- Fig. 4: eine Ansicht auf den Gehäuseanschlussflansch mit Dichtmanschette und Kältemittelanschlüssen und
- Fig. 5: den Gehäuseanschlussflansch gemäß Fig. 4 mit Dichtmanschette und eingesetzten Haltern - ohne die Kältemittelanschlüsse.

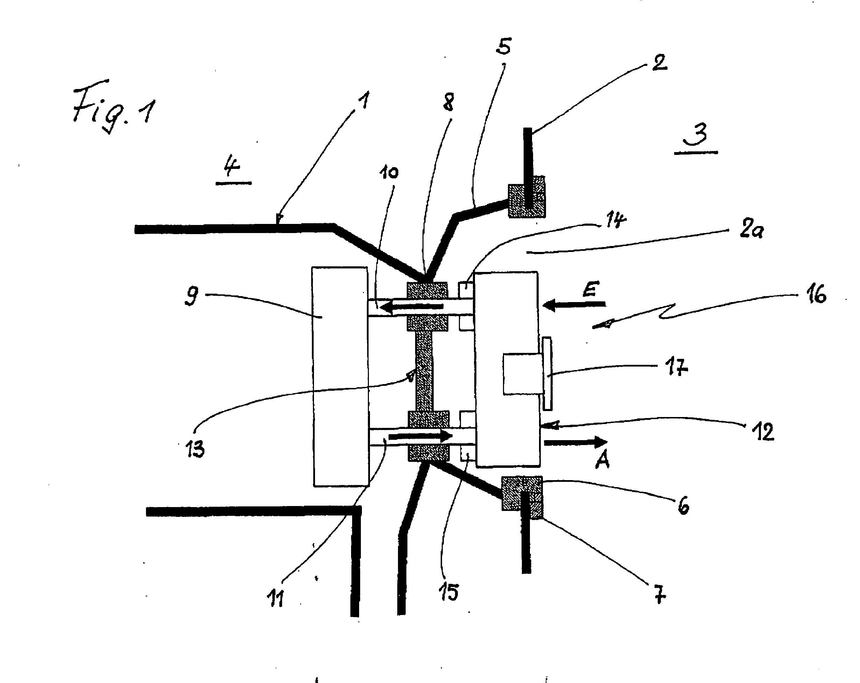

**Fig. 1** zeigt ein teilweise dargestelltes Basisgehäuse 1 einer Klimaanlage für ein Kraftfahrzeug, welches eine Stim- bzw. Spritzwand 2 zur Abteilung eines Motorraumes 3 von einem Fahrzeuginnenraum 4 aufweist. Das Klimaanlagengehäuse 1 weist einen etwa muldenförmig ausgebildeten Gehäuseanschlussflansch 5 auf, welcher stirnseitig mittels einer Dichtmanschette 6 gegenüber der Spritzwand 2 abgedichtet ist. Die Dichtmanschette 6 ist vorzugsweise aus einem Elastomer, insbesondere aus Gummi hergestellt und umfasst den Rand 2b einer Öffnung 2a in der Spritzwand 2, wobei auf der Motorraumseite 3 ein Stützring 7 zur Verstärkung der Dichtmanschette 6 angeordnet ist. Der Gehäuseanschlussflansch 5, kurz Gehäuseflansch genannt, verjüngt sich von der Spritzwand 2 in Richtung Basisgehäuse 1 bis zu einer Verbindungsstelle 8, wo Gehäuseflansch 5 und Klimaanlagenbasisgehäuse 1 ineinander übergehen oder dicht miteinander verbunden sind. Innerhalb des Basisgehäuses 1 ist ein Verdampfer 9 angeordnet, welcher über Kältemittelrohre 10, 11 (Kältemittelleitungsabschnitte) mit einem Expansionsventil 12 verbunden ist, welches sich im Wesentlichen innerhalb der muldenförmigen Öffnung des Gehäuseflansches 5 befindet. Im Bereich der Verbindungsstelle 8 ist ein Einsatzstück in Form einer Dichtbrille 13 angeordnet, welche vorzugsweise aus einem Gummiwerkstoff hergestellt und von den beiden Kältemittelrohren 10, 11 durchquert wird. Die Dichtbrille 13 ist einerseits gasdicht im Bereich der Verbindungsstelle 8 gegenüber dem Basisgehäuse 1 bzw. dem Gehäuseanschlussflansch 5 abgedichtet und umschließt andererseits die Kältemittelrohre 10, 11 gasdicht. Die Kältemittelrohre 10, 11 sind einerseits mit dem Verdampfer 9 stoffschlüssig verbunden, vorzugsweise verlötet und andererseits über eine nicht näher dargestellte Steck- und Schraubverbindung, mittels Schraubflanschen 14, 15 mit dem Expansionsventil 12 verbunden. Vorzugsweise sind der Verdampfer 9, die Kältemittelrohre 10, 11 und das Expansionsventil 12 als vormontierte Baueinheit 16 ausgebildet. Der Gehäuseanschlussflansch 5, die Dichtbrille 13 sowie das Gehäuse 1 sind daher in einer Trennebene - parallel zur Zeichenebene - geteilt. Somit kann die vormontierte Baueinheit 16 in eine Hälfte eingelegt und durch Aufsetzen sowie Verpressen der zweiten Hälfte im Bereich der Dichtbrille 13 abgedichtet werden. Die beiden Gehäusehälften (von Klimaanlagenbasisgehäuse 1 und Gehäuseanschlussflansch 5) werden beispielsweise durch eine nicht dargestellte Feder/Nut-Verbindung gasdicht miteinander verbunden. Das Expansionsventil 12 weist - wie aus dem Stand der Technik bekannt - zwei nicht dargestellte Kältemitteldurchgänge auf, welche durch Pfeile E, A angedeutet sind. Im Bereich der beiden Pfeile E, A werden an das Expansionsventil 12 nicht dargestellte Kältemittelleitungen angeschlossen, welche zum nicht dargestellten Kältemittelkreislauf der Klimaanlage führen. Die Klimaanlage wird vorzugsweise mit Kohlendioxid (CO₂ bzw. R744) betrieben. Die Komponenten des Kältemittelkreislaufes sind somit erheblich höheren Betriebsdrücken gegenüber einer herkömmlichen mit R134a betriebenen Klimaanlage ausgesetzt. Dem entsprechend sind auch die Komponenten der Klimaanlage wie Kältemittelrohre und Verdampfer entsprechend stärker dimensioniert. Beispielsweise herrscht vor dem Expansionsventil 12 im Bereich des Pfeiles E (Eintritt) ein Kältemitteldruck von etwa 120 bar, welcher im Expansionsventil 12 auf etwa 30 bar entspannt wird. Im Verdampfer 9 wird die flüssige Phase des Kältemittels unter Aufnahme von Wärme weitestgehend verdampft, wodurch die Kühlwirkung eintritt. Aus Sicherheitsgründen weist das Expansionsventil 12 eine Niederdruckberstscheibe 17 auf, welche im Berstfalle zum Motorraum 3 öffnet, so dass auch in diesem Falle kein CO₂ in den Fahrzeuginnenraum 4 gelangt, sondern in den Motorraum 3 abströmt.

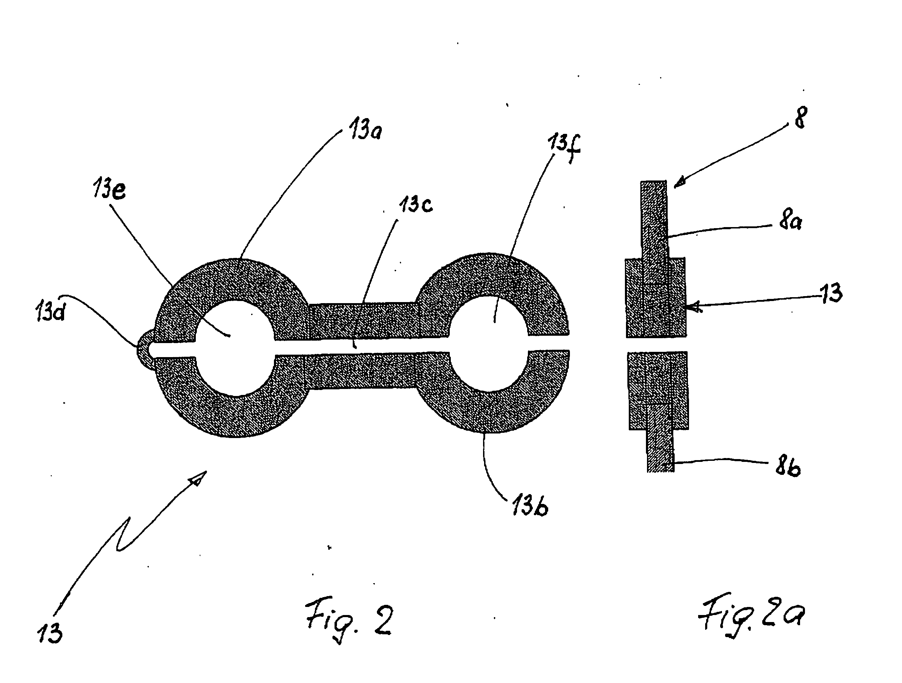

**Fig. 2** zeigt die Dichtbrille 13 als Einzelteil in einer vergrößerten Darstellung. Wie bereits erwähnt, ist die Dichtbrille 13 geteilt: sie weist zwei Hälften 13a, 13b auf, welche im Bereich einer Trennebene 13c geteilt und seitlich durch ein Filmscharnier 13d miteinander verbunden sind. Die Dichtbrille 13 ist vorzugsweise aus Gummi hergestellt und somit elastisch verformbar. Die Dichtbrille 13 weist zwei Durchgangsöffnungen 13e, 13f, welche von den Kältemittelrohren 10, 11 (hier nicht dargestellt) durchsetzt werden. Beim Einbau in den Gehäuseanschlussflansch 5 im Bereich der Verbindungsstelle 8 wird die Dichtbrille 13 derart verpresst, dass sie einerseits mit ihrem Außenumfang an den Gehäusehälften des Klimaanlagengehäuses 1 und des Gehäuseanschlussflansches 5 anliegt und andererseits die Kältemittelrohre 10, 11 dicht umschließt. Hierdurch kann eine gasdichte Abdichtung erzielt werden.

**Fig. 2a** zeigt eine Seitenansicht der Dichtbrille 13, mit Teilen einer Gehäusewand 8a, 8b, welche im Bereich der Verbindungsstelle 8 (vgl. Fig. 1) über eine Feder/Nut-Verbindung mit der Dichtbrille 13 gasdicht verbunden ist.

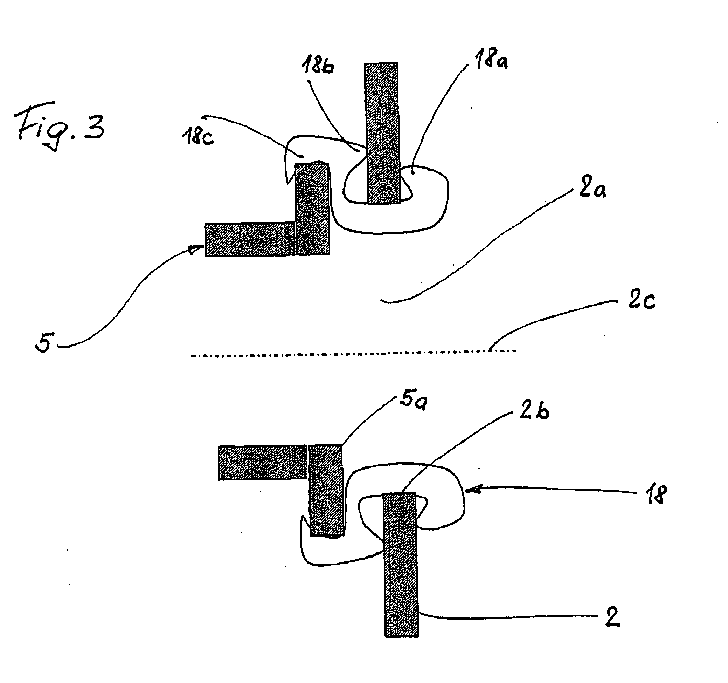

**Fig. 3** zeigt einen vergrößerten Ausschnitt im Bereich der Abdichtung des Gehäuseanschlussflansches 5 gegenüber der Spritzwand 2, welche eine von einem Rand 2b begrenzte Öffnung 2a mit einer Längsachse 2c aufweist. Der Gehäuseanschlussflansch 5 weist stirnseitig einen Dichtflansch 5a auf, welcher einen etwas größeren Außendurchmesser als die Öffnung 2a in der Spritzwand 2 aufweist. Zwischen dem Dichtflansch 5a und dem Rand 2b der Spritzwand 2 ist ein im Querschnitt etwa S-förmig ausgebildetes Dichtelement 18 angeordnet, welches Dichtlippen 18a, 18b aufweist, welche an entgegengesetzten Seiten der Spritzwand 2 anliegen und somit eine Abdichtung bewirken. Das Dichtelement 18 weist ferner einen nutförmig ausgebildeten Abschnitt 18c auf, welcher den Dichtflansch 5a des Gehäuseanschlussflansches 5 umgreift. Aus Fig. 3 in Verbindung mit Fig. 1 ist ersichtlich, dass zwischen dem Gehäuseanschlussflansch 5 und der Spritzwand 2 bei Verwendung des Dichtelementes 18 ein gewisses Spiel in Richtung der Achse 2c und auch senkrecht zu dieser Achse möglich ist. Bei einer Befestigung der Klimaanlage 1 an der Spritzwand 2 (was nicht dargestellt ist) kann infolge dieser Dichtungsanordnung ein Toleranzausgleich ermöglicht werden.

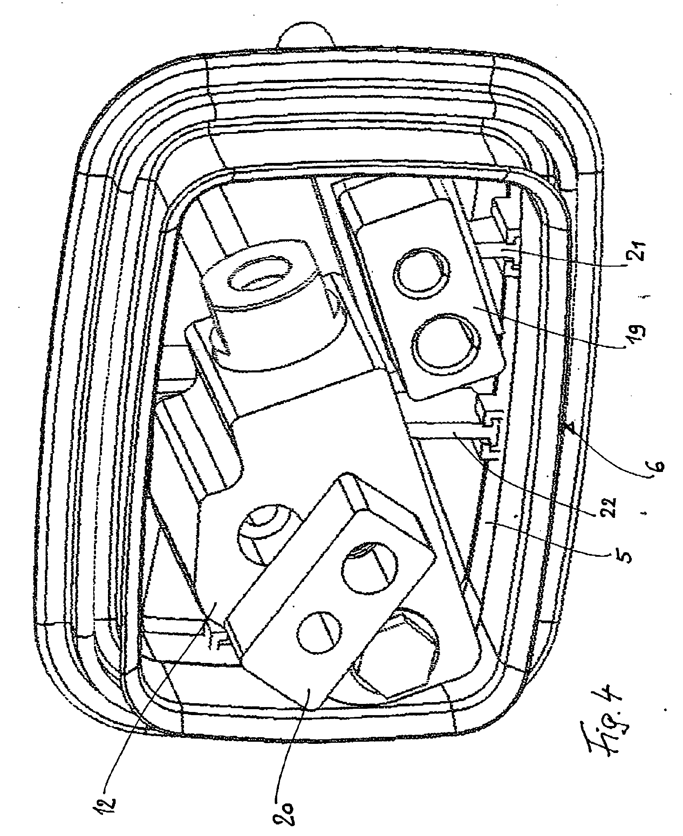

**Fig. 4** zeigt eine Ausgestaltung der Dichtmanschette 6 gemäß Fig. 1 in Verbindung mit dem Gehäuseanschlussflansch 5, welcher aus Kunststoff hergestellt ist und mit der Dichtmanschette 6 aus Gummi verbunden ist. Die Dichtmanschette 6 weist einen etwa rechteckförmigen Querschnitt auf und wird in die hier nicht dargestellte Öffnung 2a der Spritzwand 2 eingesetzt. Innerhalb der Dichtmanschette 6 sind Kältemittelanschlusselemente, z. B. Blockverschraubungen 19, 20 sowie das Expansionsventil 12 angeordnet, welche sich an Haltern 21, 22 abstützen. Damit werden Anzugsmomente, welche bei der Montage von nicht dargestellten Kältemittelanschlussleitungen auftreten, über die Halter 21, 22 in den Gehäuseanschlussflansch 5 eingeleitet. Die Verdampferrohre werden damit entlastet.

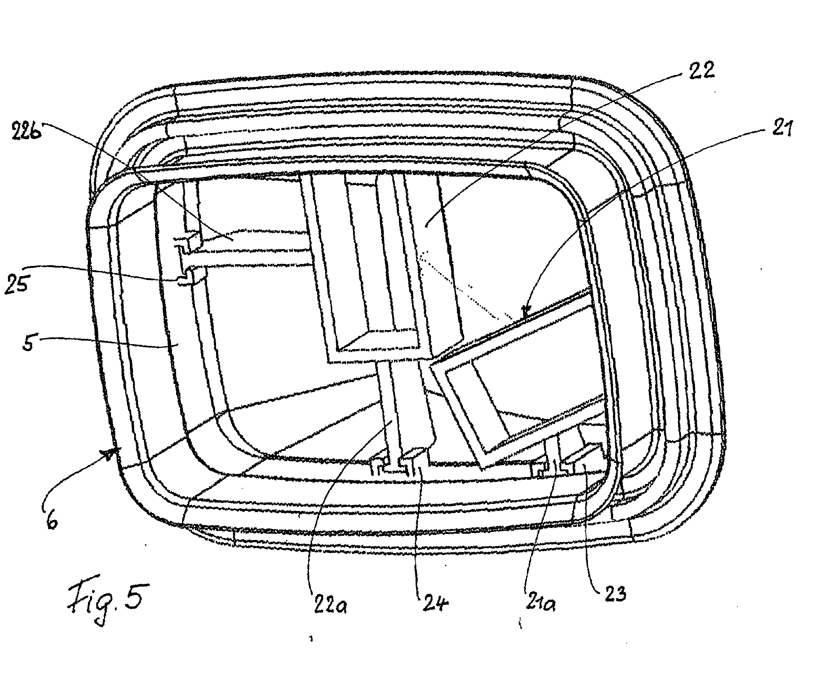

**Fig. 5** zeigt die Dichtmanschette 6 mit Gehäuseanschlussflansch 5, wie in Fig. 4 dargestellt, jedoch ohne die Blockverschraubungen 19, 20 und das Expansionsventil 12. Die Halter 21, 22 sind als separate Teile, vorzugsweise als Kunststoffsprüzteile ausgebildet und in den Gehäuseflansch 5 einsetzbar, wofür entsprechende Befestigungsstellen 23, 24, 25, z. B. als Rast- oder Feder/Nut-Verbindungen vorgesehen sind. Die Halter 21, 22 sind einerseits kastenförmig ausgebildet und an die jeweilige Form der Komponenten angepasst und andererseits mit Haltearmen 21a, 22a, 22b versehen. Die Halter können in ihrer Form und ihren Befestigungsstellen sowie in ihrer Anzahl an die jeweiligen Komponenten der Kältemittelanlage angepasst werden - insofern ist der Gehäuseflansch 5 vielseitig für verschiedene Bauformen anwendbar.

Wie aus Fig. 4 und Fig. 5 ersichtlich ist, sind die Halter 21, 22 rahmenartig ausgeführt. Dadurch stellen diese eine gute Abstützung und Ableitung von Kräften zur Verfügung, die beim Anziehen der Kältemittelleitungsverbindungen auftreten. Dabei treten nämlich Kräfte auf, die im Wesentlichen in der Ebene der Halterahmen 21, 22 verlaufen. In der zu dieser Ebene normal stehenden Richtung können sich dagegen im vorliegend dargestellten Ausführungsbeispiel Expansionsventil 12 und Blockverschraubungen 20, 21 relativ zur Abstützvorrichtung bewegen, so dass Vibrationen gedämpft werden können und ggf. auftretende thermische Verspannungen ausgeglichen werden können Möglich ist es auch, ein Spiel zwischen Abstützvorrichtung und den darin aufgenommenen Bauteilen vorzusehen, bzw. die Abstützvorrichtungen auf ihren Innenseiten mit geeigneten Beschichtungen (z.B. einer Art Schaumgummi) zu versehen.

Wie im obigen Ausführungsbeispiel beschrieben, ist der Gehäuseanschlussflansch 5 mit Dichtmanschette 6 und Dichtbrille 13 bevorzugt für mit CO₂ betriebene Klimaanlagen verwendbar, wobei allerdings auch eine Verwendung für konventionelle Klimaanlagen, die mit R134a betrieben werden, von Vorteil sein kann. Der Gehäuseanschlussflansch 5 kann somit wahlweise für eine mit R134a oder eine mit R744 betriebene Klimaanlage eingesetzt werden. Damit ergeben sich infolge höherer Stückzahlen Kostenvorteile.

## Patentansprüche

1. Klimaanlagengehäuse (1) für eine Kraftfahrzeugklimaanlage mit wenigstens einem Aufnahmeraum für zumindest ein flanschartiges Verbindungsmittel (12, 19) von kältemittelführenden Bauteilen (10, 11, E, A) und wenigstens einer Abstützvorrichtung (21, 22) für zumindest ein flanschartiges Verbindungsmittel (12, 19) zur Aufnahme von Kräften, **dadurch gekennzeichnet, dass** zumindest eine Abstützvorrichtung (21,22) rahmenartig ausgebildet ist, wobei die Abstützvorrichtung über stegartige Haltemittel (21 a, 22a) am Klimaanlagengehäuse (1) angeordnet ist.

2. Klimaanlagengehäuse nach Anspruch 1, **dadurch gekennzeichnet, dass** wenigstens eine Abstützvorrichtung (21, 22) als separates, in das Klimaanlagengehäuse (1) einsetzbares Teil ausgebildet ist.

3. Klimaanlagengehäuse nach einem der vorangehenden Ansprüche, **dadurch gekennzeichnet, dass** der Aufnahmeraum für das flanschartige Verbindungsmittel (12, 19) durch erste Dichtmittel (13) von a-temluftführenden (1) Bereichen des Klimaanlagengehäuses (1) abgedichtet ist.

4. Klimaanlagengehäuse nach einem der vorangehenden Ansprüche, **dadurch gekennzeichnet, dass** das Klimaanlagengehäuse (1) einen Anbaubereich (5) zur Verbindung mit einem dazu korrespondierenden Befestigungsbereich (2) wie insbesondere einer Spritzwand eines Kraftfahrzeugs aufweist, der über zweite Dichtmittel (6) gegenüber dem Befestigungsbereich (5) abdichtbar ist.

5. Klimaanlagengehäuse nach Anspruch 4, **dadurch gekennzeichnet, dass** die zweiten Dichtmittel als Manschette (6), vorzugsweise wenigstens zum Teil aus einem Elastomer ausgebildet sind.

6. Klimaanlagengehäuse nach einem der vorangehenden Ansprüche, **dadurch gekennzeichnet, dass** der Manschette (6) ein Stützring (7) zugeordnet ist.

7. Klimaanlagengehäuse nach einem der Ansprüche 3 bis 6, **dadurch gekennzeichnet, dass** die ersten Dichtmittel als ein oder mehrere Einsatzstücke (13) ausgebildet sind, durch welches KäRemittelleitungen (10, 11 abgedichtet durchführbar sind.

8. Klimaanlagengehäuse nach Anspruch 7, **dadurch gekennzeichnet, dass** wenigstens ein Einsatzstück als Dichtring und/oder Dichtbrille (13) mit Durchtrittsöffnungen (13e, 13f) ausgebildet und vorzugsweise wenigstens zum Teil aus einem Elastomer ausgebildet ist.

9. Klimaanlagengehäuse nach einem der vorangehenden Ansprüche, **dadurch gekennzeichnet, dass** die ersten Dichtmittel (13) und/oder die zweiten Dichtmittel (6) und/oder das Klimaanlagengehäuse (1), insbesondere der Anschlussbereich (5), in einer Trennebene teilbar ist.

10. Klimaanlage aufweisend einen Verdampfer (9) und ein Expansionsorgan (12), **gekennzeichnet durch** ein Klimaanlagengehäuse (1) nach einem der vorangehenden Ansprüche.

11. Klimaanlage nach Anspruch 10, **dadurch gekennzeichnet, dass** der Verdampfer (2) und das Expansionsorgan (12) als vormontierte Baueinheit (16) ausgebildet sind.

12. Klimaanlage nach Anspruch 10 oder 11, **dadurch gekennzeichnet, dass** der Verdampfer (2) und das Expansionsorgan (12) über Kältemittelleitungen (10, 11) miteinander verbunden sind.

## Claims

1. An air conditioner housing (1) for a motor vehicle air conditioner having at least one receiving space for at least one flange-like connecting means (12, 19) of refrigerant-conducting components (10, 11, E, A) and at least one supporting device (21, 22) for at least one flange-like connecting means (12, 19) for absorbing forces,
**characterised in that**
at least one supporting device (21, 22) is designed in the manner of a frame, said supporting device (21, 22) being positioned on the air conditioner housing (1) by web-like retaining means (21a, 22a).

2. An air conditioner housing in accordance with claim 1,
**characterised in that**
at least one supporting device (21, 22) is designed as a separate part which can be inserted into the air conditioner housing (1).

3. An air conditioner housing in accordance with one of the preceding claims,
**characterised in that**
the receiving space for the flange-like connecting means (12, 19) is sealed against breathing air-conducting (1) areas of the air conditioner housing (1) by first sealing means (13),

4. An air conditioner housing in accordance with one of the preceding claims,
**characterised in that**
the air conditioner housing (1) has a mounting area for connecting to a corresponding securing area (2), such as in particular a bulkhead of a motor vehicle, which can be sealed against the securing area (5) by second sealing means (6).

5. An air conditioner housing in accordance with claim 4,
**characterised in that**
the second sealing means are designed as a collar (6), preferably at least partially made of an elastomer.

6. A air conditioner housing in accordance with one of the preceding claims,
**characterised in that**
a supporting ring (7) is assigned to the collar (6).

7. An air conditioner housing in accordance with one of claims 3 to 6,
**characterised in that**
the first sealing means are designed as one or more inserts (13) through which refrigerant lines (10, 11) can be passed in a sealed manner.

8. An air conditioner housing in accordance with claim 7,
**characterised in that**
at least one insert is designed as a ring gasket and/or a double ring gasket (13) with holes (13e, 13f) and preferably made at least partially of elastomer.

9. A air conditioner housing in accordance with one of the preceding claims,
**characterised in that**
the first sealing means (13) and/or the second sealing means (6) and/or the air conditioner housing (1), especially the connecting area, can be parted along a parting plane.

10. An air conditioner having an evaporator (9) and an expansion vessel (12),
**characterised by**
an air conditioner housing (1) in accordance with one of the preceding claims.

11. An air conditioner in accordance with claim 10,
**characterised in that**
the evaporator (2) and the expansion vessel (12) are designed as a preassembled module.

12. An air conditioner in accordance with claim 10 or 11,
**characterised in that**
the evaporator (2) and the expansion vessel (12) are connected to one another by refrigerant lines (10, 11).

## Revendications

1. Carter de système de climatisation (1) pour un système de climatisation d'un véhicule automobile, comprenant au moins un espace de logement pour au moins un moyen d'assemblage (12, 19), en forme de bride, de pièces de structure (10, 11, E, A) acheminant un fluide frigorigène, et au moins un dispositif support (21, 22) pour au moins un moyen d'assemblage (12, 19), en forme de bride, servant absorber des forces,
**caractérisé en ce qu'**au moins un dispositif support (21, 22) est configuré en forme de cadre, le dispositif support étant disposé sur le carter (1) du système de climatisation, par des moyens de retenue (21a, 22a) formant des parties de liaison.

2. Carter de système de climatisation selon la revendication 1, **caractérisé en ce qu'**au moins un dispositif support (21, 22) est configuré comme une pièce distincte pouvant être montée dans le carter (1) du système de climatisation.

3. Carter de système de climatisation selon l'une ou l'autre des revendications précédentes, **caractérisé en ce que** l'espace de logement prévu pour le moyen d'assemblage (12, 19), en forme de bride, est rendu étanche par des premiers moyens d'étanchéité (13) de zones du carter (1) du système de climatisation, zones qui acheminent de l'air respirable.

4. Carter de système de climatisation selon l'une quelconque des revendications précédentes, **caractérisé en ce que** le carter (1) du système de climatisation présente une zone rapportée (5) servant à l'assemblage avec une zone de fixation (2) lui correspondant, comme en particulier un tablier d'auvent d'un véhicule automobile, zone rapportée qui peut être rendue étanche, par rapport à la zone de fixation (2), par des deuxièmes moyens d'étanchéité (6).

5. Carter de système de climatisation selon la revendication 4, **caractérisé en ce que** les deuxièmes moyens d'étanchéité sont configurés comme une manchette (6), se composant de préférence, au moins en partie, d'un élastomère.

6. Carter de système de climatisation selon l'une quelconque des revendications précédentes, **caractérisé en ce qu'**une bague d'appui (7) est associée à la manchette (6).

7. Carter de système de climatisation selon l'une quelconque des revendications 3 à 6, **caractérisé en ce que** les premiers moyens d'étanchéité sont configurés comme une ou plusieurs pièces intercalaires (13) grâce à laquelle ou auxquelles les conduites de fluide frigorigène (10, 11) peuvent être traversées en étant étanches.

8. Carter de système de climatisation selon la revendication 7, **caractérisé en ce qu'**au moins une pièce intercalaire est conçue comme une bague d'étanchéité et / ou un joint d'étanchéité (13) comprenant des ouvertures de passage (13e, 13f) et conçue en se composant de préférence, au moins en partie, d'un élastomère.

9. Carter de système de climatisation selon l'une quelconque des revendications précédentes, **caractérisé en ce que** les premiers moyens d'étanchéité (13) et / ou les deuxièmes moyens d'étanchéité (6) et / ou le carter (1) du système de climatisation, en particulier la zone rapportée (5), sont divisibles dans un plan de séparation.

10. Système de climatisation présentant un évaporateur (9) et un détendeur (12), **caractérisé par** un carter de système de climatisation (1) selon l'une quelconque des revendications précédentes.

11. Système de climatisation selon la revendication 10, **caractérisé en ce que** l'évaporateur (9) et le détendeur (12) sont conçus comme un ensemble prémonté (16).

12. Système de climatisation selon la revendication 10 ou 11, **caractérisé en ce que** l'évaporateur (9) et le détendeur (12) sont reliés l'un à l'autre par des conduites de fluide frigorigène (10, 11).
